# EUROPÄISCHE PATENTANMELDUNG

(11) **EP 3 098 142 A1**
(43) Veröffentlichungstag der Anmeldung: **30.11.2016**
(21) Anmeldenummer: 16168692.8
(22) Anmeldetag: 09.05.2016
(51) Int. Cl.: B62D 21/14, B60P 3/40

(54) **TIEFLADER ZUM TRANSPORT KREISRINGSEGMENTFÖRMIGER LASTEN**

(30) Priorität: 19.05.2015 DE 202015102555 U
(71) Anmelder: Meusburger Fahrzeugbau GmbH, 94535 Eging am See (DE)
(72) Erfinder: Thomas, Meusburger, 94535 Eging am See (DE)
(74) Vertreter: Winter, Brandl, Fürniss, Hübner, Röss, Kaiser, Polte - Partnerschaft mbB

(57) **Zusammenfassung**

Die Erfindung betrifft einen Tieflader (10) zum Stehendtransport einer Last, die eine kreisringsegmentförmige, im Besonderen halbkreisringförmige, Aufstandsfläche hat, mit einer Ladefläche (13), die eine wenigstens in Krümmung und Breite der Aufstandsfläche entsprechende kreisringsegmentförmige Auflagerfläche enthält, und einer Achsanordnung, die zwei in einem vorgegebenen Achsabstand angeordnete Starrachsen (15,16) umfasst, wobei die Räder jeder Starrachse durch in Spurbreitenrichtung der jeweiligen Starrachse beabstandete Radaussparungen hindurch über die Ladehöhe der Ladefläche hinaus ragen. Erfindungsgemäß erstreckt oder "schlängelt" sich die kreisringsegmentförmige Auflagerfläche sowohl zwischen den linken und rechten Rädern der in Fahrtrichtung vorderen Starrachse als auch zwischen den linken und rechten Rädern der vorderen und hinteren Starrachse hindurch. Vorteilhaft liegt der Flächenschwerpunkt der kreisringsegmentförmigen Auflagerfläche (13') zumindest im Wesentlichen in der Breitenmitte des Tiefladers und ist die kreisringsegmentförmige Auflagerfläche bezüglich einer durch den Flächenschwerpunkt gehenden Querachse des Tiefladers zumindest im Wesentlichen symmetrisch ausgerichtet.

## Beschreibung

Die Erfindung betrifft einen Tieflader zum Stehendtransport kreisringsegmentförmiger, im Besonderen halbkreisringförmiger, Lasten, im Besonderen halbkreisringförmiger Betonfertigteile zur Errichtung eines Turmbauwerks einer Windkraftanlage, wie es beispielsweise in der deutschen Patentanmeldung DE 10 2011076 648 A1 (Max Bögl Wind AG) beschrieben ist.

Die DE 10 2011 076 648 A1 befasst sich mit der Errichtung einer Windkraftanlage und schlägt hierzu ein aus wenigstens zwei Abschnitten bestehendes Turmbauwerk vor, wobei zumindest ein auf einem Fundament ruhender unterer Abschnitt aus konischen Betonringen aufgebaut sein soll. Die DE 10 2011 076 648 A1 informiert des Weiteren darüber, dass bei Nabenhöhen von 100 bis 150 m die untersten konischen Betonringe beispielsweise einen Durchmesser von 12 m und Gewichte bis zu 100 Tonnen erreichen können. Um einen Straßentransport mittels LKW bis in den Ausladungsbereich eines für die Errichtung der Windkraftanlage erforderlichen Turmdrehkrans zu ermöglichen, wird daher vorgeschlagen, die untersten Betonringe je nach Größe und Gewicht aus zwei oder mehreren ringsegmentförmigen konischen Betonfertigteilen zusammenzusetzen.

Die große Anzahl derartiger ring- oder ringsegmentförmiger Betonfertigteile hat in den letzten Jahren dazu geführt, dass für deren Transport relativ schwere und relativ komplex aufgebaute Fahrzeuge konstruiert und gebaut wurden. Die zu transportierenden Betonfertigteile haben üblicherweise eine Höhe von 3600 mm bis 3800 mm, eine Dicke von ca. 300 mm und einen Außenradius von 2500 mm bis zu 4850 mm. Wie es in der DE 10 2011076 648 A1 angegeben ist, sind die obersten Betonfertigkeile regelmäßig als Ringe (Ganzschalen) und die unteren Betonfertigteile als Ringsegmente, im Besonderen als Halbringe (Halbschalen), ausgeführt.

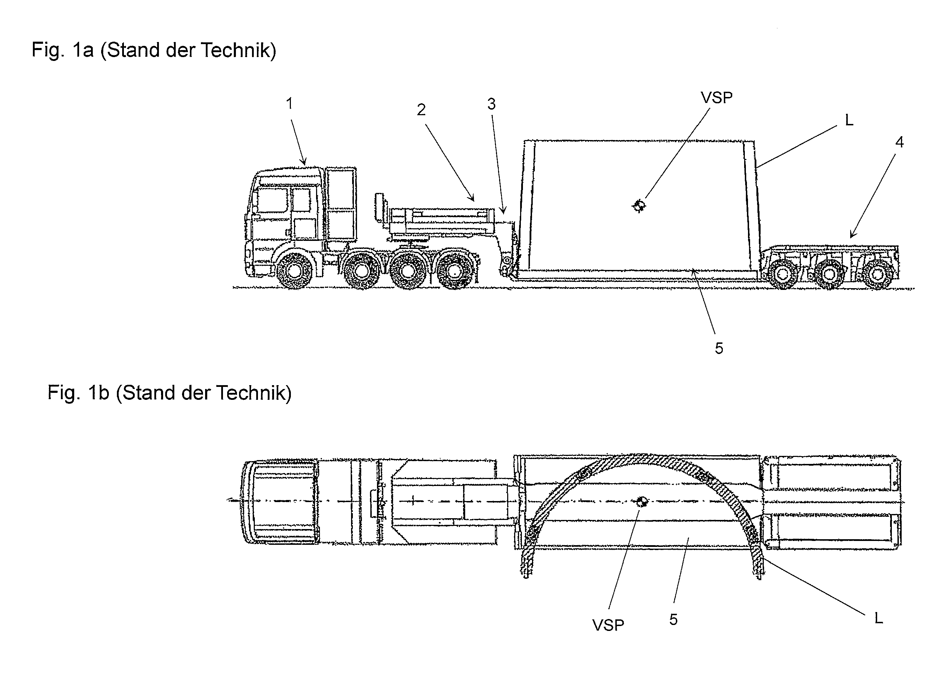

Die Fig. 1a und 1b zeigen in einer Seitenansicht und Draufsicht schematisch ein Beispiel für einen Sattelzug nach dem Stand der Technik zum Transport eines konischen, halbkreisringförmigen Betonfertigteils L (Last), wie es für die Errichtung eines Turmbauwerks einer Windkraftanlage verwendet wird. Der gezeigte Sattelzug umfasst einen von einer Sattelzugmaschine 1 gezogenen Satteltieflader 2 mit einem sog. Schwanenhals 3 (Kröpfung) im vorderen Teil, an dem der Satteltieflader 2 mit der Zugmaschine 1 gekoppelt ist, einer aus drei gelenkten Achsen bestehenden Achsanordnung 4 im hinteren Teil und einer Ladebrücke mit einer Tiefbett-Ladefläche 5 zwischen dem Schwanenhals 3 und der Achsanordnung 4. Das Betonfertigteil L wird auf der Tiefbett-Ladefläche 5 - wie in Fig. 1a, 1b gezeigt - stehend transportiert und zwar so, dass der Volumenschwerpunkt VSP des Betonfertigteils L in einer vertikalen Projektion (vgl. Fig. 1b) möglichst in der Breitenmitte des Satteltiefladers 2 liegt, um eine möglichst gleichmäßige Auslastung der rechten und linken Räder der Achsanordnung 4 des Satteltiefladers 2 zu gewährleisten. Die Fig. 1a zeigt, dass die Tiefbett-Ladefläche 5 auf einer Höhe liegt, die kleiner ist als der Durchmesser der Räder bzw. Reifen der Hinterachsanordnung 4. In dem in Fig. 1a, 1b gezeigten Beispiel beansprucht das Betonfertigteil L nahezu die gesamte Länge der Tiefbett-Ladefläche 5.

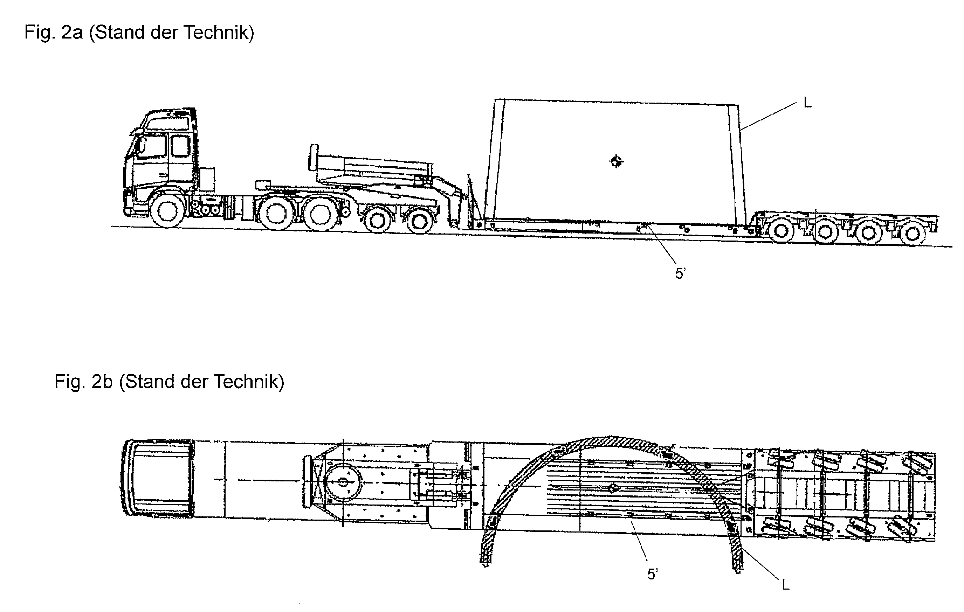

Um im Durchmesser bzw. in der Länge größere Betonfertigteile transportieren zu können, ist eine größere Tiefbett-Ladefläche erforderlich. Ein Beispiel für einen derartigen Sattelzug ist in Fig. 2a, 2b gezeigt. Die größere Tiefbett-Ladefläche 5' bedeutet aber eine größere Gesamtlänge sowie ein höheres Gesamtgewicht des Tiefladers. Um das größere Gewicht der zu transportierenden Betonfertigteile auf die Fahrbahn übertragen zu können, kann zudem eine weitere gelenkte Achse erforderlich sein.

Alternativ dazu könnte der Satteltieflader abweichend von der in Fig. 1a, 1b oder Fig. 2a, 2b gezeigten Ausführung eine teleskopisch längenverstellbare (ausziehbare) Ladebrücke aufweisen, die eine Anpassung der Länge der Tiefbett-Ladefläche an unterschiedliche große Betonfertigteile ermöglicht. Derartige teleskopierbare Satteltieflader sind dem Fachmann aus der Praxis und Fachmagazinen hinlänglich bekannt. Sie werden beispielsweise von der Anmelderin hergestellt und vertrieben. Einer beliebigen Verlängerung des Satteltiefladers sind aber aufgrund gesetzlicher Vorgaben sowie aus Stabilitäts-, Gewichts- und Kostengründen Grenzen gesetzt.

Ein Anheben der Ladefläche auf eine Höhe über den Rädern der Hinterachsanordnung, um dadurch bei gleichbleibender Gesamtlänge des Tiefladers eine vergrößerte Ladefläche zu erhalten, würde zu einer übermäßigen Zunahme der Gesamthöhe des beladenen Satteltiefladers resultieren, welche für den Straßentransport der oben diskutierten Betonfertigteile mit einer Höhe von ca. 3800 mm nicht praxistauglich ist.

Von diesem Hintergrund liegt der Erfindung die Aufgabe zugrunde, einen Tieflader, im Besonderen in der Ausführung als Sattelauflieger, zu schaffen, der mit einer relativ einfachen und leichten Konstruktion eine ausreichend große Ladefläche bereitstellt, die einen Stehendtransport kreisringsegmentförmiger, im Besonderen halbkreisringförmiger, Lasten, im Besonderen halbkreisringförmiger Betonfertigteile zur Errichtung eines Turmbauwerks einer Windkraftanlage, ermöglicht.

Gelöst wird diese Aufgabe durch einen Tieflader mit den Merkmalen des Anspruchs 1. Vorteilhafte Weiterbildungen sind Gegenstand abhängiger Ansprüche.

Ein erfindungsgemäßer Tieflader zum Stehendtransport von Lasten, die eine kreisringsegmentförmige, im Besonderen halbkreisringförmige, Aufstandsfläche haben, weist eine Ladefläche, die eine wenigstens in Krümmung und Breite der Aufstandsfläche einer zu transportierenden Last entsprechende kreisringsegmentförmige Auflagerfläche enthält, und eine Achsanordnung auf, die wenigstens zwei in einem vorgegebenen Achsabstand angeordnete Starrachsen umfasst, deren Räder durch in Spurbreitenrichtung der jeweiligen Starrachse beabstandete Radaussparungen hindurch über die Ladehöhe der Ladefläche hinaus ragen. Erfindungsgemäß soll sich die kreisringsegmentförmige Auflagerfläche sowohl zwischen den Rädern (d.h. den linken und rechten Rädern) der in Fahrtrichtung vorderen Starrachse als auch zwischen der vorderen und hinteren Starrachse (d.h. den linken oder rechten Rädern der vorderen und hinteren Starrachse) hindurch erstrecken.

Bei einem erfindungsgemäßen Tieflader handelt es sich um ein Fahrzeug mit tief liegender Ladefläche zum Transport schwerer und/oder sperriger Lasten. Der grundsätzliche Aufbau, die Funktion und die verschiedenen Ausführungsformen eines Tiefladers sind dem Fachmann bekannt.

Der erfindungsgemäße Tieflader ist für den Stehendtransport von Lasten mit kreisringsegmentförmiger, im Besonderen halbkreisringförmiger, Aufstandsfläche konzipiert. Bei der Aufstandsfläche der Last handelt es sich um die boden- oder unterseitige Fläche, mit bzw. auf der die jeweilige Last auf der Ladefläche des Tiefladers steht, wobei die Aufstandsfläche jedoch nicht vollflächig auf der Ladefläche aufliegen muss. Derartige Lasten umfassen im Besonderen konische kreisring- oder kreisringsegmentförmige Betonfertigteile, wie sie für die Errichtung eines Windkraftanlagenturms eingesetzt werden, mit einer Höhe von 3600 mm bis 3800 mm, einer Dicke von etwa 300 mm und, je nachdem in welcher Höhe das jeweilige Betonfertigteil verbaut wird, einem Außenradius von 2500 mm bis 4850 mm. Aufgrund des großen Außendurchmessers sind die größeren der zu transportierenden Betonfertigteile als Kreisringsegmente, im Besonderen als Halbkreisringe (auch Halbschalen genannt), ausgeführt.

Um derartige Lasten auf der Ladefläche des Tiefladers anordnen zu können, muss die Ladefläche eine wenigstens in Krümmung (bzw. im Außenradius und Innenradius) und Breite (= Dicke der Last) der Aufstandsfläche entsprechende kreisringsegmentförmige Auflagerfläche bereitstellen. Die Auflagerfläche stellt damit einen Teil der Ladefläche dar. Anders ausgedrückt liegt die Auflagerfläche als Teil der Ladefläche in der Ladefläche. Die Ladefläche muss daher wenigstens die Auflagerfläche überdecken. Die Auflagerfläche muss wenigstens in Krümmung (bzw. im Außenradius und Innenradius) und Breite (= Dicke der Last) mit der Aufstandsfläche übereinstimmen. Die Bogenlänge der Auflagerfläche kann dagegen kleiner sein als die Bogenlänge der Aufstandsfläche der zu transportierenden Last. Ist die Bogenlänge der Auflagerfläche kleiner als die Bogenlänge der Aufstandsfläche der zu transportierenden Last, steht die Last an einem oder - wie in dem in Fig. 1b skizzierten Fall - beiden Bogenenden über die Auflagerfläche bzw. Ladefläche hinaus. Die Auflagerfläche ergibt sich somit aus der vertikal auf die Ladefläche projizierten Aufstandsfläche der Last.

Um die Transporthöhe des mit der Last beladenen Fahrzeugs möglichst gering zu halten, wird eine besonders tiefliegende Ladefläche angestrebt. Die Ladefläche kann eine durchgehende ebene Fläche oder - beispielsweise für den Fall, dass der Tieflader längenteleskopierbar ist - eine gegebenenfalls aus Teilflächen zusammengesetzte ebene Fläche sein, die die zu transportierende Last trägt bzw. auf der die zu transportierende Last abgestellt oder angeordnet werden kann.

Ein erfindungsgemäßer Tieflader weist in seinem Heckbereich eine wenigstens zwei (eine vordere und eine hintere) baugleiche, mit einem vorgegebenen Achsabstand angeordnete Starrachsen aufweisende Achsanordnung auf. Neben den beiden Starrachsen kann die Achsanordnung eine oder mehrere weitere Achsen, z.B. Starrachse(n) und/oder gelenkte Achse(n), im Besonderen eine sog. Nachlauf-Lenkachse, aufweisen, die in (Vorwärts-)Fahrtrichtung des Tiefladers hinter den beiden Starrachsen liegt. Für den Fall, dass mehr als zwei Achsen vorgesehen sind, bilden die beiden Starrachsen stets die in (Vorwärts-)Fahrtrichtung vorderen Achsen. Derartige, mehrere Achsen (Starr- und/oder gelenkter Achsen) umfassende Achsanordnungen sind dem Fachmann grundsätzlich bekannt. Die räumliche Ausdehnung bzw. der Platzbedarf der beiden vorderen Starrachsen ist durch deren Bereifung (Einfach-/Zwillingsbereifung und Reifengröße) sowie deren Spurbreite bestimmt. Die auf das Gewicht der zu transportierenden Last abgestimmte Reifengröße bestimmt die Größe der die Räder aufnehmenden Radaussparungen. Die die wenigstens zwei Starrachsen aufweisende Achsanordnung ist zusätzlich durch den Achsabstand zwischen den beiden Starrachsen definiert. In Kenntnis der Reifengröße können die Spurbreite und der Spurbreitenabstand zwischen den Rädern der Starrachsen durch Verwendung einer passenden Gesamtbreite des Tiefladers bestimmt werden. Alternativ dazu in Kenntnis der Gesamtbreite des Tiefladers können die Spurbreite und der Spurbreitenabstand zwischen den Rädern der Starrachsen durch Wahl einer geeigneten Bereifung bestimmt werden. Analoge Überlegungen gelten für die Bestimmung des Achsabstands zwischen den beiden Starrachsen.

Im Unterschied zu einem sog. Überfahrtieflader, bei dem alle Räder der Achsanordnung unter der Ladefläche liegen, ragen bei dem erfindungsgemäßen Tieflader die Räder der Achsanordnung durch in Spurbreitenrichtung der jeweiligen Starrachse beabstandete Radaussparungen hindurch über die Ladehöhe der Ladefläche hinaus. Der Raddurchmesser der Räder ist also größer als die von der Fahrbahn aus gemessene Ladehöhe der Ladefläche des Tiefladers. Im Unterschied zu einem sog. Zwischenfahrtieflader, bei dem sich die Ladefläche lediglich durch den zwischen den linken und rechten Rädern liegenden Bereich hindurch erstreckt, dehnt sich bei dem erfindungsgemäßen Tieflader die Ladefläche auch in den Achsabstandsbereich zwischen der vorderen und hinteren Starrachse über die Gesamtbreite des Tiefladers aus. Bei dem erfindungsgemäßen Tieflader dehnt sich die Ladefläche daher in den von der Hinterachsanordnung, im Besonderen den von den beiden Starrachse beanspruchten Bereich aus, der durch die Spurbreite der baugleichen Starrachsen, die Bereifung und den Achsabstand zwischen der vorderen und hinteren Starrachse begrenzt und daher berechenbar oder bestimmbar ist.

Erfindungsgemäß erstreckt oder "schlängelt" sich die kreisringsegmentförmige Auflagerfläche sowohl durch den zwischen den linken und rechten Rädern der in Fahrtrichtung vorderen Starrachse liegenden Spurbreitenabstandsbereich als auch durch den zwischen den linken oder rechten Rädern der vorderen und hinteren Starrachse liegenden Achsabstandsbereich hindurch. In Kenntnis der Bereifung und der Gesamtbreite des Tiefladers lassen sich für den Fachmann die erforderliche Spurbreite und der erforderliche Achsabstand in Abhängigkeit von den Ausmaßen der zu transportierenden Last(en) rechnerisch und/oder zeichnerisch so ermitteln, dass sich die kreisringsegmentförmige Aufstandsfläche der Last(en) bis in den durch die beiden Starrachsen begrenzten Ladeflächenbereich hineinlegen, d.h. zwischen die Räder der beiden Starrachsen hindurch "einfädeln", lässt.

Die im Bereich der beiden Starrachsen liegende Ladefläche umfasst einen ersten Ladeflächenbereich zwischen den linken und rechten Rädern oder Radaussparungen für die linken und rechten Räder der vorderen Starrachse und einen zweiten Ladeflächenbereich zwischen den Rädern oder Radaussparungen für die Räder der vorderen Starrachse und den Rädern oder Radaussparungen für die Räder der hinteren Starrachse. Erfindungsgemäß sind die in Spurbreitenrichtung der vorderen Starrachse gemessene Breite des ersten Ladeflächenbereichs (oder der Abstand der in Spurbreitenrichtung gegenüberliegenden Radaussparungen für die Räder der vorderen Starrachse) und die in Achsabstandsrichtung der beiden Starrachsen gemessene Länge des zweiten Ladeflächenbereichs (oder der Abstand der in Achsabstandsrichtung hintereinanderliegenden Radaussparungen für die Räder der vorderen Starrachse und hinteren Starrachse) im Besonderen also so auf die zu transportierende(n) Last(en) (Krümmung bzw. Außen- und Innendurchmesser und Dicke) abgestimmt, dass sich bei einer stehenden Anordnung auf der Ladefläche des Tiefladers die Aufstandsfläche jeder Last bzw. die ladeflächenseitige Auflagerfläche durch den ersten Ladeflächenbereich und zweiten Ladeflächenbereich hindurch erstreckt.

Durch die erfindungsgemäß vorgesehene Nutzung der sich in den Bereich der beiden Starrachsen erstreckenden Ladefläche als Auflagerfläche für die zu transportierende(n) Last(en) ergeben sich gegenüber den bekannten Über- und Zwischenfahrtiefladern zahlreiche Vorteile. Zunächst wird ein nicht unerheblicher Teil der Last in Richtung der beiden Starrachsen verlagert bzw. auf die beiden Starrachsen verteilt. Verglichen mit einem herkömmlichen Tieflader, bei dem die gesamte Last auf der Ladefläche vor der Achsanordnung ruht, ermöglicht der erfindungsgemäße Tieflader eine Verkürzung der Gesamtlänge und damit des Gewichts und der Herstell- bzw. Anschaffungskosten. Abweichungen von den in der Straßenverkehrsordnung vorgesehenen Maximalabmessungen lassen sich daher so gering als möglich halten, wodurch Sondergenehmigungen leichter erreichbar sind.

Erfindungsgemäß liegt der Flächenschwerpunkt der kreisringsegmentförmigen Auflagerfläche vorteilhaft zumindest im Wesentlichen in der Breitenmitte des Tiefladers und ist die kreisringsegmentförmige Auflagerfläche vorteilhaft bezüglich einer durch den Flächenschwerpunkt gehenden Querachse des Tiefladers zumindest im Wesentlichen symmetrisch ausgerichtet. Die Lage des Flächenschwerpunkts der Auflagerfläche auf der Ladefläche des Tiefladers stimmt mit der Lage des auf die Ladefläche projizierten Volumenschwerpunkts der Last überein. Wenn die kreisringsegmentförmige Auflagerfläche so angeordnet ist, dass deren Flächenschwerpunkt im Wesentlichen in der Breitenmitte der Ladefläche des Tiefladers, d.h. auf einer Längsmittelachse des Tiefladers, liegt und die kreisringsegmentförmige Auflagerfläche vorteilhaft bezüglich einer durch den Flächenschwerpunkt gehenden Querachse des Tiefladers im Wesentlichen symmetrisch ausgerichtet ist, ist das Gewicht der zu transportierenden Last in Breitenrichtung des Tiefladers optimal verteilt.

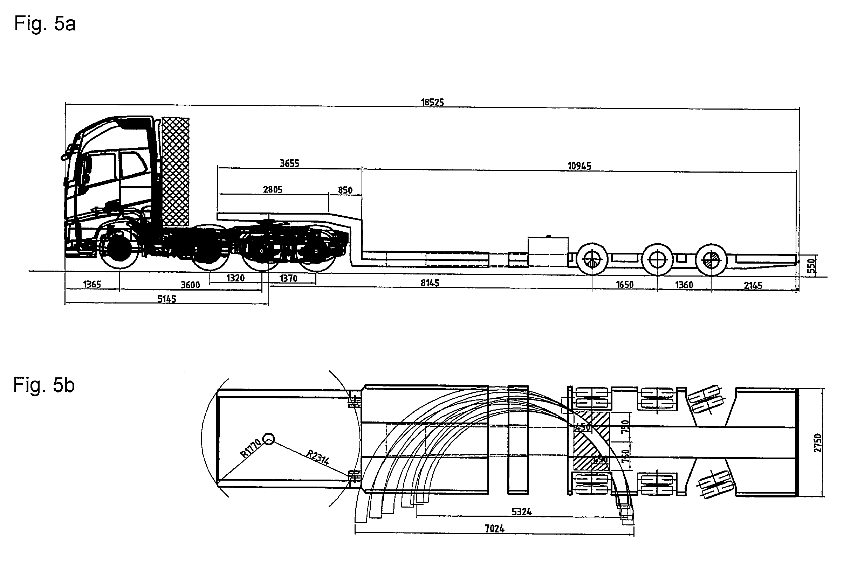

In Längsrichtung des Tiefladers variiert die Lage des Flächenschwerpunkts der im Bereich der beiden Starrachsen angeordneten Aufstandsfläche der Last in Abhängigkeit von der Größe der zu transportierenden Last, d.h. vom Außen-/Innendurchmesser bzw. Außen-/Innenradius der Last (vgl. hierzu z.B. Fig. 5b). Der in (Vorwärts-)Fahrtrichtung des Tiefladers vor den beiden Starrachsen liegende oder z.B. durch teleskopische Verlängerung bereitstellbare Ladeflächenbereich hat daher eine ausreichend große Länge, um den vor den beiden Starrachsen anzuordnenden Teil der Last anordnen zu können.

Da die zu transportierenden Lasten oftmals überbreit sind, ist eine relativ große Spurbreite erwünscht, um eine vernünftige Auflagerfläche gewährleisten zu können. Im Vergleich zu herkömmlichen Tiefladern gelingt dies durch die Vergrößerung der Spurbreiten der beiden Starrachsen auf mindestens 2040 mm, idealerweise von 2140 mm bis 2230 mm. Die Spurbreite wird bestimmt durch die Bereifung und Reifengröße jeder Starrachse und die Gesamtbreite des Tiefladers. Im Hinblick auf das hohe Gewicht der zu transportierenden Lasten können die Räder der Starrachsen beispielsweise eine Zwillingsbereifung der Größe 235/75 R 17,5, 245/70 R 17,5, 255/60 R 19,5, 245/70 R 19,5, 265/70 R 19,5 oder 285/70 R 19,5 aufweisen. Im Hinblick auf eine vernünftige Auflagerfläche kann die Gesamtbreite des Tiefladers auf eine Überbreite ausgedehnt werden, d.h. im Bereich größer als 2550 mm bis maximal 3000 mm, vorteilhaft im Bereich von 2750 mm bis 3000 mm, z.B. in etwa bei 2750 mm, liegen.

Je nach Bereifung, Reifengröße und Gesamtbreite kann die in Spurbreitenrichtung gemessene Breite der Ladefläche zwischen den Rädern der Starrachsen im Bereich von 1610 mm bis 1650 mm, idealerweise bei 1610 mm, liegen. Des Weiteren ist die in Achsabstandsrichtung gemessene Länge der Ladefläche zwischen den Rädern der vorderen Starrachse vorteilhaft kleiner-gleich 900 mm.

Je nach Reifengröße kann der Achsabstand zwischen den beiden Starrachsen größer-gleich 1360 mm sein, idealerweise im Bereich von 1510 mm bis 1650 mm liegen.

Die oben angegebenen Spurbreiten und Achsabstände berücksichtigen neben dem Platzbedarf der Räder bzw. der Bereifung der Starrachsen ein erforderliches seitliches Spiel zwischen den Rädern und dem Rahmen des Tiefladers sowie einen gegebenenfalls zusätzlich erforderlichen Abstand zur Anbringung von Kotflügeln bzw. Spritzschutzmaßnahmen, etc..

Ein erfindungsgemäßer Tieflader ist vorteilhaft als ein Satteltieflader mit einer gegenüber einer höher liegenden Sattelplatte tiefer liegende Ladefläche ausgeführt und hat vorteilhaft eine längenteleskopierbare Ladebrücke. Eine längenteleskopierbare Ladebrücke ermöglicht eine flexible Anpassung der Länge der Ladefläche an die Größe der auf der Ladefläche anzuordnenden Last.

Des Weiteren hat der erfindungsgemäße Tieflader im Hinblick auf das hohe Gewicht der zu transportierenden Lasten vorteilhaft eine hinter den beiden Starrachsen angeordnete gelenkte Achse (sog. Nachlauf-Lenkachse).

Eine in der vorliegenden Anmeldung nicht beanspruchte, unabhängige Erfindung, für die z.B. im Wege einer späteren Patentnachanmeldung, die die Priorität der vorliegenden Anmeldung in Anspruch nimmt, um Schutz nachgesucht werden kann, ist ein Verfahren zum Stehendtransport einer Last, die eine kreisringsegmentförmige, im Besonderen halbkreisringförmige, Aufstandsfläche hat, mit Hilfe eines Tiefladers nach einem der Ansprüche 1 bis 12. Das Verfahren sieht vor, die Last zum Stehendtransport auf der Ladefläche des Tiefladers so anzuordnen, dass sich die Aufstandsfläche der Last zwischen den Rädern der in Fahrtrichtung vorderen Starrachse des Tiefladers als auch zwischen die linken oder rechten Räder der vorderen und hinteren Starrachse hindurch erstreckt. Dabei kann die Last im Besonderen so angeordnet werden, dass der auf die Ladefläche des Tiefladers projizierte Flächenschwerpunkt der Aufstandsfläche der Last in der Breitenmitte des Tiefladers liegt. Des Weiteren kann die Last auf der Ladefläche des Tiefladers so ausgerichtet werden, dass sie bezüglich einer Querachse des Tiefladers, die durch den auf die Ladefläche projizierten Flächenschwerpunkt der Aufstandsfläche der Last geht, symmetrisch ist.

Anhand der beigefügten Zeichnungen werden im Folgenden beispielhafte Ausführungsformen eines erfindungsgemäßen Tiefladers erläutert. In den Zeichnungen zeigt:
Fig. 1a eine Seitenansicht eines Beispiels für einen Sattelzug nach dem Stand der Technik mit einem von einer Sattelzugmaschine gezogenen Satteltieflader zum Stehendtransport eines halbringförmigen Betonfertigteils;
Fig. 1b eine Draufsicht des Sattelzugs aus Fig. 1a;
Fig. 2a eine Seitenansicht eines weiteren Beispiels für einen Sattelzug nach dem Stand der Technik mit einem von einer Sattelzugmaschine gezogenen Satteltieflader zum Stehendtransport eines halbringförmigen Betonfertigteils;
Fig. 2b eine Draufsicht des Sattelzugs aus Fig. 2a;
Fig. 3a eine Seitenansicht eines Sattelzugs mit einem von einer Sattelzugmaschine gezogenen, teleskopierbaren Satteltieflader gemäß einer ersten Ausführungsform der Erfindung;
Fig. 3b eine Draufsicht des Satteltiefladers aus Fig. 3a;
Fig. 4a eine Seitenansicht des Sattelzugs aus Fig. 3a mit einer vergrößerten Ladefläche;
Fig. 4b eine Draufsicht des Satteltiefladers aus Fig. 3a;
Fig. 5a eine der Fig. 3a entsprechende Seitenansicht;
Fig. 5b eine der Fig. 3b entsprechende Draufsicht zur Erläuterung der Längsrichtungslagen verschieden großer halbkreisringförmiger Lasten auf der Ladefläche;
Fig. 6a eine Seitenansicht eines Sattelzugs mit einem von einer Sattelzugmaschine gezogenen, teleskopierbaren Satteltieflader gemäß einer zweiten Ausführungsform der Erfindung; und
Fig. 6b eine Draufsicht des Satteltiefladers aus Fig. 6a;
Fig. 6c eine Seitenansicht des Sattelzugs aus Fig. 6a mit einer kreisringförmigen Last auf der Ladefläche; und
Fig. 6d eine Draufsicht des Satteltiefladers aus Fig. 6c.

### Erste Ausführungsform

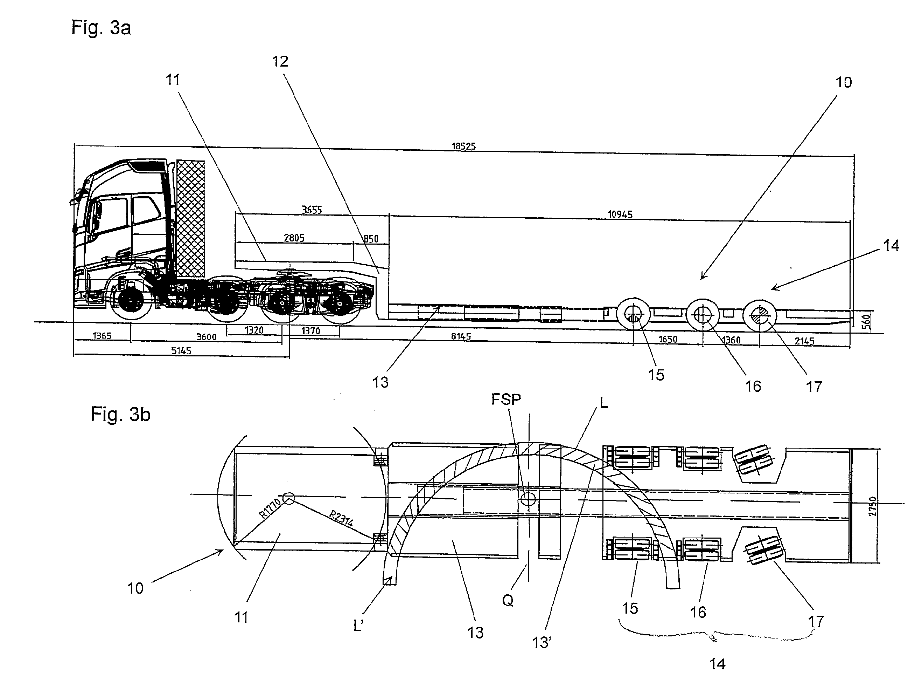

Die Fig. 3a und 3b zeigen eine erste Ausführungsform eines erfindungsgemäßen Tiefladers 10 in Form eines von einer Sattelzugmaschine gezogenen Satteltiefladers. Der Tieflader 10 hat in an sich bekannter Weise im Anschluss an eine höher liegende Sattelplatte 11, einen sog. Schwanenhals 12 (Kröpfung), eine tiefliegende, zweifach längenteleskopierbare Ladebrücke mit einer Ladefläche 13 sowie im Heckbereich des Tiefladers eine drei Achsen 15, 16, 17 aufweisende Achsanordnung 14.

Die drei Achsen umfassen eine vordere und einen hintere Starrachse 15, 16 sowie eine hinter den beiden Starrachsen 15, 16 angeordnete gelenkte Achse 17 (sog. Nachlauf-Lenkachse). Die beiden Starrachsen 15, 16 sind baugleich und mit einem Achsabstand von etwa 1650 mm angeordnet. Die Fig. 3a und 3b zeigen, dass die jeweils zwillingsbereiften Räder jeder der drei Achsen 15, 16, 17 jeweils durch eine in Spurbreitenrichtung beabstandete Radaussparung hindurch über die Ladehöhe von etwa 560 mm der Ladefläche 13 hinaus ragen.

In der gezeigten Ausführungsform hat der Tieflader eine Gesamtbreite von 2750 mm. Die Spurbreite der drei Achsen 15, 16, 17 beträgt etwa 2190 mm bei einer Reifengröße 235/75 R 17,5 oder 245/70 R 17,5. Bei dieser Konfiguration ergibt sich für den zwischen den Rädern der vorderen Starrachse 15 liegenden (ersten) Ladeflächenbereich in Spurbreitenrichtung eine Breite von etwa 1610 mm und in Achsabstandrichtung eine Länge von etwa 900 mm.

Die. Fig. 3a, 3b lassen des Weiteren erkennen, dass sich aufgrund der teleskopisch verlängerbaren Ausführung des Tiefladers 10 die Ladefläche 13 aus mehreren Teilflächen zusammensetzt, die jedoch alle auf der Ladehöhe von 560 mm, d.h. in einer Ebene liegen. Im Bereich der Achsanordnung setzt sich die Ladefläche 13 erfindungsgemäß in die Bereiche zwischen den linken und rechten Rädern jeder der drei Achsen 15, 16, 17 sowie über die Gesamtbreite des Tiefladers 10 in die Achsabstandsbereiche zwischen den drei Achsen 15, 16, 17 fort. Der erfindungsgemäße Tieflader 10 unterscheidet sich somit bereits durch die Ausdehnung der Ladefläche 13 von den allgemein bekannten Über- und Zwischenfahrtiefladern.

Erfindungsgemäß sind bei dem in Fig. 3a und 3b gezeigten Tieflader die Spurbreite, die Reifengröße und der Achsabstand zwischen den beiden vorderen Achsen, d.h. den beiden Starrachsen 15, 16, auf die Abmessung der zu transportierenden kreisringsegmentförmigen Last so abgestimmt, dass die Last L in den Spurbreitenabstandsbereich zwischen den linken und rechten Rädern der vorderen Starrachse 15 und in den Achsabstandsbereich zwischen den in Fig. 3b linken Rädern der vorderen und hinteren Starrachse 15, 16 hindurch "eingefädelt" werden kann.

Eine mit dem erfindungsgemäßen Tieflader in stehender Anordnung (vgl. hierzu Fig. 1a, 2a) zu transportierende Last L hat eine kreisringsegmentförmige, in Fig. 3b halbkreisringförmige, Aufstandsfläche L' (boden- oder unterseitige Fläche), mit der die Last L auf der Ladefläche 13 steht. Zu beachten gilt, dass die Aufstandsfläche 13 nicht vollflächig auf der Ladefläche 13 aufliegen muss. In dem in Fig. 3b skizzierten Beispiel beispielsweise ragt die Aufstandsfläche L' der Last L und damit auch die Last L an beiden Bogenenden auf der in (Vorwärts-)Fahrtrichtung linken Seite über die Ladefläche 13 des Tiefladers hinaus. Zudem ist die Ladefläche 13 aus mehreren, in Fig. 3b drei Teilflächen zusammengesetzt.

Die Ladefläche 13 sieht erfindungsgemäß eine wenigstens in Krümmung und Breite der Aufstandsfläche L' der Last L entsprechende kreisringsegmentförmige Auflagerfläche 13' vor, die in Fig. 3b gestrichelt angegeben ist. Die Auflagerfläche 13' entspricht der auf die Ladefläche 13 projizierten Aufstandsfläche L' der Last. Die Auflagerfläche 13' liegt als Teilfläche der Ladefläche 13 in der Ladefläche 13. Sie erstreckt sich sowohl durch den Spurbreitenabstandsbereich zwischen den Rädern der in Fahrtrichtung vorderen Starrachse 15 als auch durch den Achsabstandsbereich zwischen der vorderen und hinteren Starrachse 15, 16 hindurch, wie es in Fig. 3b gezeigt ist. Die Fig. 3b lässt erkennen, dass die Ladefläche 13 größer sein kann als die in der Ladefläche 13 enthaltene Auflagerfläche 13'. Des Weiteren ist in dem in Fig. 3b gezeigten Beispiel die Aufstandsfläche der Last L größer als die Auflagerfläche 13'. In dem in Fig. 3b gezeigten Beispiel ragt die Last L und damit die Aufstandsfläche L' der Last L in (Vorwärts-)Fahrtrichtung des Tiefladers 10 auf der linken Seite seitlich über die Ladefläche 13 hinaus. Aufgrund der seitlich hinausragenden Aufstandsfläche L' ist die Bogenlänge der in der Ladefläche 13 liegenden, kreisringsegmentförmigen Auflagerfläche 13' kleiner als die Bogenlänge der halbkreisringförmigen Aufstandsfläche L'.

Erfindungsgemäß liegt der Flächenschwerpunkt FSP der kreisringsegmentförmigen Auflagerfläche 13' in der Breitenmitte des Tiefladers 10 (auf der in Fig. 3b strichpunktiert eingetragenen Längsmittelachse des Tiefladers 10) und ist die kreisringsegmentförmige Auflagerfläche 13' bezüglich einer durch den Flächenschwerpunkt FSP gehenden (in Fig. 3b strichpunktiert eingetragenen) Querachse Q des Tiefladers 10 symmetrisch ausgerichtet. Der seitliche Überstand ist an den beiden Bogenenden der Aufstandsfläche L' der Last L also gleich groß. Die Lage des Flächenschwerpunkts FSP der Auflagerfläche 13' auf der Ladefläche 13 des Tiefladers 10 stimmt mit der Lage des auf die Ladefläche 13 projizierten (nicht angegebenen) Volumenschwerpunkts der Last L überein.

Durch die erfindungsgemäß vorgesehene Nutzung der sich in den Bereich der beiden Starrachsen 15, 16 erstreckenden Ladefläche 13 als Auflagerfläche 13' für die zu transportierende Last L ergeben sich gegenüber den bekannten Über- und Zwischenfahrtiefladern zahlreiche Vorteile. Zunächst wird ein nicht unerheblicher Teil der Last L in Richtung der beiden Starrachsen 15, 16 verlagert bzw. auf die beiden Starrachsen 15, 16 verteilt. Verglichen mit einem herkömmlichen Tieflader, bei dem die gesamte Last auf der Ladefläche vor der Achsanordnung ruht, ermöglicht der erfindungsgemäße Tieflader eine Verkürzung der Gesamtlänge und damit des Gewichts und der Herstell- bzw. Anschaffungskosten. Abweichungen von den in der Straßenverkehrsordnung vorgesehenen Maximalabmessungen lassen sich daher so gering als möglich halten, wodurch Sondergenehmigungen leichter erreichbar sind.

Durch die Anordnung der kreisringsegmentförmigen Auflagerfläche 13' so, dass deren Flächenschwerpunkt FSP im Wesentlichen in der Breitenmitte der Ladefläche 13 des Tiefladers 10 liegt und die kreisringsegmentförmige Auflagerfläche 13' bezüglich einer durch den Flächenschwerpunkt FSP gehenden Querachse Q des Tiefladers 10 im Wesentlichen symmetrisch ausgerichtet ist, ist das Gewicht der zu transportierenden Last in Breitenrichtung des Tiefladers optimal auf die linken und rechten Räder der Achsanordnung 14 verteilt.

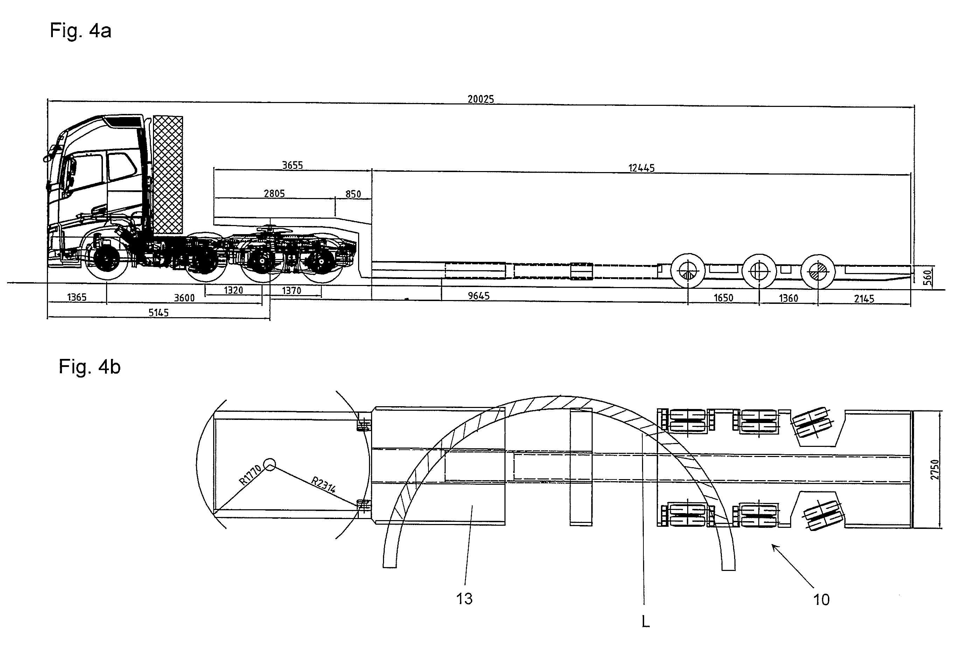

Die Fig. 4a, 4b zeigen den Tieflader 10 aus Fig. 3a, 3b in einem Zustand mit einer der Größe der zu transportierenden L entsprechend verlängerten Ladefläche 13. Die Fig. 5a, 5b zeigen den Tieflader 10 aus Fig. 3a, 3b in einem Zustand mit verlängerter Ladefläche 13, die für verschieden große Lasten Platz zur Anordnung bietet. Die teleskopierbare Ausführung des Tiefladers ermöglicht daher eine flexible Anpassung der Länge der Ladefläche 13 bzw. der Gesamtlänge des Tiefladers 10 an die Größe der zu transportierenden Last L.

### Zweite Ausführungsform

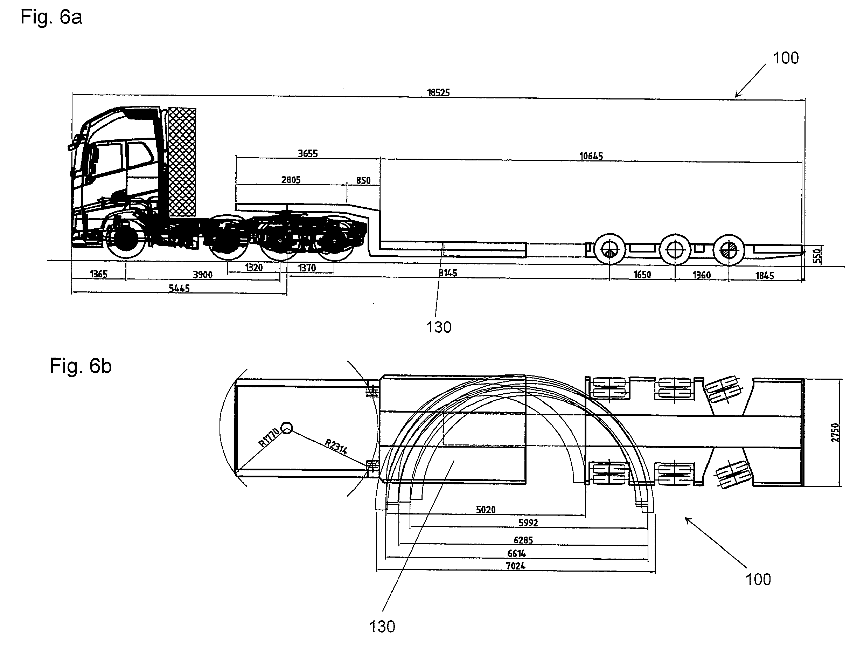

Die Fig. 6a, 6b zeigen eine zweite Ausführungsform eines erfindungsgemäßen Tiefladers 100 in Form eines von einer Sattelzugmaschine gezogenen Satteltiefladers. Der Tieflader 100 unterscheidet sich von dem mit Hilfe der Fig. 3a bis 5b vorgestellten Tieflader 10 der ersten Ausführungsform lediglich darin, dass er nur einfach längenteleskopierbar ausgeführt ist. Davon abgesehen gleicht der Tieflader dem der ersten Ausführungsform.

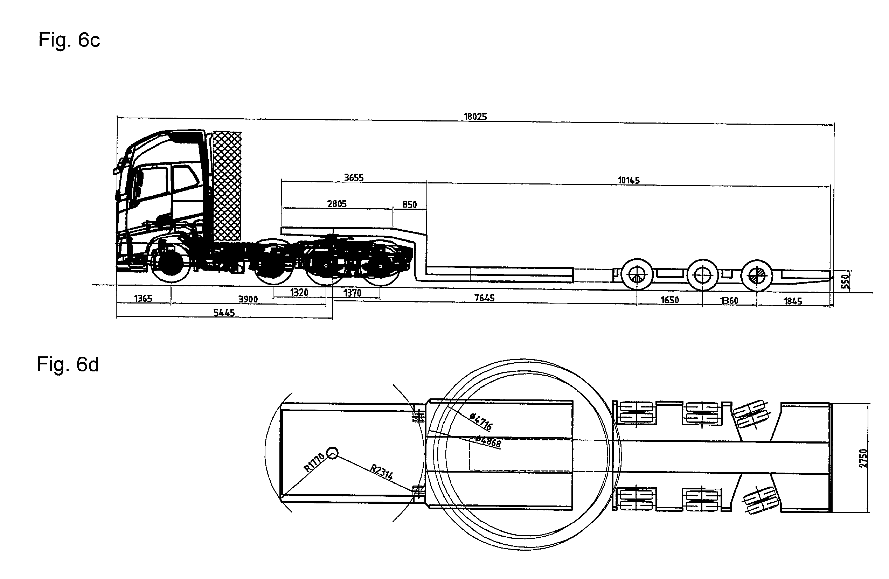

Lediglich der guten Ordnung halber sei darauf hingewiesen, dass der erfindungsgemäßen Tieflader zwar für den Stehendtransport von Lasten, die eine kreisringsegmentförmige, im Besonderen halbkreisringförmige, Aufstandsfläche haben, konzipiert ist, er sich aber natürlich auch für den Transport kreisringförmiger Lasten nutzen lässt, wie es in Fig. 6c, 6d gezeigt ist.

### Zusammenfassung

Die Erfindung betrifft einen Tieflader zum Stehendtransport einer Last, die eine kreisringsegmentförmige, im Besonderen halbkreisringförmige, Aufstandsfläche hat, mit einer Ladefläche, die eine wenigstens in Krümmung und Breite der Aufstandsfläche entsprechende kreisringsegmentförmige Auflagerfläche enthält, und einer Achsanordnung, die zwei in einem vorgegebenen Achsabstand angeordnete Starrachsen umfasst, wobei die Räder jeder Starrachse durch in Spurbreitenrichtung der jeweiligen Starrachse beabstandete Radaussparungen hindurch über die Ladehöhe der Ladefläche hinaus ragen. Erfindungsgemäß erstreckt oder "schlängelt" sich die kreisringsegmentförmige Auflagerfläche sowohl zwischen den linken und rechten Rädern der in Fahrtrichtung vorderen Starrachse als auch zwischen den linken und rechten Rädern der vorderen und hinteren Starrachse hindurch. Vorteilhaft liegt der Flächenschwerpunkt der kreisringsegmentförmigen Auflagerfläche zumindest im Wesentlichen in der Breitenmitte des Tiefladers und ist die kreisringsegmentförmige Auflagerfläche bezüglich einer durch den Flächenschwerpunkt gehenden Querachse des Tiefladers zumindest im Wesentlichen symmetrisch ausgerichtet.

## Patentansprüche

1. Tieflader (10) zum Stehendtransport einer Last (L), die eine kreisringsegmentförmige, im Besonderen halbkreisringförmige, Aufstandsfläche (L') hat, mit einer Ladefläche (13), die eine wenigstens in Krümmung und Breite der Aufstandsfläche (L') entsprechende kreisringsegmentförmige Auflagerfläche (13') enthält, und einer Achsanordnung (14), die zwei in einem vorgegebenen Achsabstand angeordnete Starrachsen (15, 16) umfasst, wobei die Räder jeder Starrachse (15, 16) durch in Spurbreitenrichtung beabstandete Radaussparungen hindurch über die Ladehöhe der Ladefläche (13) hinaus ragen, **dadurch gekennzeichnet, dass**
die kreisringsegmentförmige Auflagerfläche (13') sich sowohl zwischen den Rädern der in Fahrtrichtung vorderen Starrachse (15) als auch zwischen der vorderen und hinteren Starrachse (15, 16) hindurch erstreckt.

2. Tieflader (10) nach Anspruch 1, **dadurch gekennzeichnet, dass** der Flächenschwerpunkt (FSP) der kreisringsegmentförmigen Auflagerfläche (13') in der Breitenmitte des Tiefladers (10) liegt.

3. Tieflader (10) nach Anspruch 1 oder 2, **dadurch gekennzeichnet, dass** die kreisringsegmentförmige Auflagerfläche (13') bezüglich einer durch den Flächenschwerpunkt (FSP) gehenden Querachse (Q) des Tiefladers (10) symmetrisch ausgerichtet ist.

4. Tieflader (10) nach einem der vorhergehenden Ansprüche, **dadurch gekennzeichnet, dass** die beiden Starrachsen (15, 16) eine Spurbreite von mindestens 2040 mm, idealerweise im Bereich von 2140 mm bis 2230 mm, haben.

5. Tieflader (10) nach einem der vorhergehenden Ansprüche, **dadurch gekennzeichnet, dass** die Räder der Starrachsen (15, 16) eine Zwillingsbereifung der Größe 235/75 R 17,5, 245/70 R 17,5, 255/60 R 19,5, 245/70 R 19,5, 265/70 R 19,5 oder 285/70 R 19,5 aufweisen.

6. Tieflader (10) nach einem der vorhergehenden Ansprüche, **dadurch gekennzeichnet, dass** die Gesamtbreite des Tiefladers (10) im Überbreitenbereich von größer-gleich 2550 mm bis 3000 mm, vorteilhaft von 2700 mm bis 3000 mm, beispielsweise bei 2750 mm, liegt.

7. Tieflader (10) nach einem der vorhergehenden Ansprüche, **dadurch gekennzeichnet, dass** die in Spurbreitenrichtung gemessene Breite der Ladefläche zwischen den Rädern der vorderen Starrachse (15) im Bereich von 1610 mm bis 1650 mm, idealerweise bei 1610 mm, liegt.

8. Tieflader (10) nach Anspruch 7, **dadurch gekennzeichnet, dass** die in Achsabstandsrichtung der beiden Starrachsen (15, 16) gemessene Länge der Ladefläche (13) zwischen den Rädern der vorderen Starrachse (15) bei höchstens 900 mm liegt.

9. Tieflader (10) nach einem der vorhergehenden Ansprüche, **dadurch gekennzeichnet, dass** der Achsabstand zwischen den beiden Starrachsen (15, 16) im Bereich von mindestens 1360 mm, idealerweise im Bereich von 1510 mm bis 1650 mm, liegt.

10. Tieflader (10) nach einem der vorhergehenden Ansprüche, **dadurch gekennzeichnet, dass** der Tieflader (10) als ein Satteltieflader mit einer gegenüber einer höher liegenden Sattelplatte (11) tiefer liegende Ladefläche (13) ausgeführt ist.

11. Tieflader (10) nach einem der vorhergehenden Ansprüche, **gekennzeichnet durch** eine längenteleskopierbare Ladebrücke.

12. Tieflader (10) nach einem der vorhergehenden Ansprüche, **gekennzeichnet durch** eine hinter den beiden Starrachsen (15, 16) angeordnete Nachlauf-Lenkachse (17).
